# FASCICULE DE BREVET EUROPEEN

(11) **EP 3 068 743 B1**
(45) Date de publication et mention de la délivrance du brevet: **15.05.2019**
(21) Numéro de dépôt: 14781854.6
(22) Date de dépôt: 06.10.2014
(51) Int. Cl.: C04B 26/26, C04B 40/00

(54) **DOPES D'ADHÉSIVITÉ LIQUIDES POUR ENROBÉS BITUMINEUX**
FLÜSSIGE ANTIABBLÄTTERUNGSMITTEL FÜR EIN BITUMINÖSES MISCHGUT
LIQUID ANTI-STRIPPING AGENTS FOR BITUMINOUS COATED MATERIALS

(30) Priorité: 13.11.2013 FR 1302604; 25.02.2014 FR 1400474
(43) Date de publication de la demande: 21.09.2016
(73) Titulaire: Rhodia Operations, 75009 Paris (FR)
(72) Inventeur: FARHOOSH, Roya, F-69006 Lyon (FR)
(74) Mandataire: Cordier, Pascal Christian
(86) Numéro de dépôt international: PCT/EP2014/071289
(87) Numéro de publication internationale: WO 2015/071027

(56) Documents cités:
- WO-A1-2007/090018
- WO-A1-2012/152459
- US-A- 4 430 465
- US-A- 5 776 234

## Description

La présente invention a trait au domaine des dopes d'adhésivité pour enrobés bitumineux, qui comprennent un liant hydrocarboné de type bitume autour de granulats, typiquement employés pour la réalisation de revêtements routiers.

Les dopes d'adhésivité (« *anti-stripping agents* » en anglais) sont des additifs bien connus dans le domaine des bitumes. Il s'agit d'agents largement utilisés dans les enrobés bitumineux (notamment les enrobés à chaud ou les enrobés tièdes destinés à la construction de revêtements routiers) et qui permettent d'augmenter les interactions entre les granulats et le liant hydrocarboné qui les enrobe, et donc d'augmenter la durabilité des revêtements réalisés à partir de ces compositions d'enrobés.

Les liants hydrocarbonés de type bitume, obtenus à partir de pétrole brut, sont des composés non polaires et hydrophobes. Dans les enrobé, ils sont typiquement associés à des granulats de nature hydrophiles avec lesquels ils n'ont pas tendance à former des liaisons fortes. De ce fait, le bitume et les granulats tendent naturellement à se désolidariser par exemple sous l'effet de l'eau de pluie ou de l'eau du sous-sol. Les dopes d'adhésivité sont des composés ajoutés justement pour améliorer les interactions entre le liant hydrocarboné et les granulats et éviter une désolidarisation des constituants de l'enrobé, qui peut conduire sinon, entre autres, à une perte d'adhérence entre les pneus des véhicules et la chaussée, ou bien encore l'arrachement de particules d'enrobés et leur projection (qui risque notamment d'endommager les pare-brise véhicules).

Typiquement, les dopes d'adhésivité employés dans les enrobés bitumineux, sont des alkylamines, polyamines, amidoamines ou imidoazolines, qui sont le plus souvent employées à raison de quelques kg par tonne de liant (typiquement de l'ordre de 3 kg de dope par tonne, à savoir 0,3% en masse). Pour plus de détails concernant ces agents et leur rôle dans les enrobés bitumineux, on pourra notamment se reporter à *Moisture Damage of Asphalt Pavements and Antistripping Additives: Causes, Identification, Testing and Mitigation*, (EMERY, John et Hoda SEDDIK). Ottawa, Transport Association of Canada, 1997, ou bien à *étude des mécanismes d'adhésion et de désenrobage des bitumes routiers* (SCOTT, J. A. N., J. C. A. SCHELLEKENS, W. C. VONK et P. N. WILSON), Bulletin de Liaison des Laboratoires des Ponts et Chausses, vol. special V, p. 23-35, 1977.

Le document US 5 776 234 A divulgue une composition bitumineuse comprenant un dope d'adhésivité de type polyimidoamine en combinaison avec un solvant comme diéthylène glycol ou dipropylène glycol.

En marge des dopes d'adhésivité usuels du type des alkylamines précitées, il a été mis en évidence plus récemment qu'une autre famille de composés s'avère intéressante à titre de dope d'adhésivité pour enrobé bitumineux, à savoir certains acides phosphoniques et certains ester de phosph(on)ate. Ces composés peuvent typiquement être employés dans les mêmes teneurs que les agents classiques de type alkylamine en assurant un effet similaire.

Ces dopes d'adhésivités phosphorés incluent notamment :
- les esters de phosph(on)ate, et en particulier :
   - Les alkyl esters de l'acide phosphonique, par exemple les esters d'alkyle en C6-C18, de préférence les esters de monoalkyle ;
   - Les alkyl esters d'acides alkylphosphoniques, où la chaîne alkyle peut optionnellement être éthoxylée et/ou propoxylée, tels que les esters de (C1-C4) alkyle d'acides (C6-C18)alkyl phosphonique , préférence les esters de monoalkyle;
   - Les alkylphosphates, de préférence les monoalkylphosphate ;
- les acides phosphoniques, en particulier les acides alkylphosphonique, notamment les acides alkylphosphonique où le groupe alkyle comprend de 6 à 18 atomes de carbone, notamment de 8 à 12 ;
et
- les mélanges de deux ou plusieurs de ces composés.

Des dopes d'adhésivité phosphorés intéressants sont notamment les produits commercialisés sous le nom de Rhodoval® DE 435, Rhodoval® DE 480 ou Rhodoval® DP 500.

Parmi les dopes d'adhésivité phosphorés récemment proposés, certains présentent un inconvénient, à savoir qu'ils se présentent sous une forme solide, peu aisée à doser, notamment sur le terrain, lorsqu'on réalise un enrobé directement dans le cadre d'un chantier routier par exemple. Parmi les dopes d'adhésivité se présentant sous forme solide, on peut notamment citer le Rhodoval DP 500 et les acides alkylphosphonique où le groupe alkyle comprend de 6 à 18 atomes de carbone, notamment l'acide octylphosphonique.

Un but de la présente invention est de fournir les dopes d'adhésivité phosphorés du type précités, notamment le Rhodoval® DP 500 et les acides alkylphosphonique, sous une forme plus aisément dosable que la forme solide. Plus généralement, l'invention se fixe pour but de permettre de formuler les dopes d'adhésivité sous forme de compositions aisément dosables et transportables.

A cet effet, la présente invention propose de solubiliser les dopes d'adhésivité dans un solvant particulier dont il a maintenant été mis en évidence par les travaux des inventeurs qu'il ne nuit pas aux propriétés dopantes des dopes d'adhésivité.

Plus précisément, la présente invention a pour objet l'utilisation d'une composition liquide, telle que définie dans la revendication 1, comprenant au moins un dope d'adhésivité pour bitume en solution dans un solvant comprenant un diol ou un triol, comme dope d'adhésivité pour bitume. Selon l'invention, on peut employer tout diol ou triol propre à solubiliser le dope d'adhésivité. De préférence mais de façon non limitative, on peut typiquement employer selon l'invention un glycol tel que l'éthylène glycol, le diéthylène glycol ou bien encore, avantageusement, l'hexylène glycol, ou bien encore le glycérol.

Dans le cadre des travaux qui ont conduit à la présent invention, il a maintenant été mis en évidence que l'ajout d'un diol ou d'un triol du type précité (en particulier l'ajout d'hexylene glycol, ou bien encore d'éthylène glycol ou de diéthylène glycol, ou bien encore de glycerol) à un dope d'adhésivité pour bitume, notamment un dope phosphoré de type esters de phosph(on)ate ou acide alkylphosphonique, n'affecte pas de façon négative les propriétés intrinsèques du dope d'adhésivité. Plus précisément, il est apparu que l'ajout d'un diol selon l'invention à un dope d'adhésivité permet d'obtenir un effet sur l'adhésion similaire à celui observé avec le dope d'adhésivité employé seul (voire une amélioration dans certains cas).

Les diols et triols proposés selon l'invention, en particulier l'éthylène glycol, le diéthylene glycol, l'hexylène glycol ou le glycérol s'avèrent de ce fait constituer des solvants particulièrement bien adaptés à la mise en solution de dopes d'adhésivité, en particulier les dopes phosphorés du type précité. Selon une première variante, illustrée ci-après, le diol employé selon l'invention est l'hexylène glycol. Selon une autre variante possible, le diol employé selon l'invention est l'éthylène glycol et/ou l'éthylène glycol. Selon encore une autre variante, on emploie du glycérol. Les diols et triols selon l'invention peuvent être employés à titre de seuls solvants ou bien être employés en mélange avec d'autres solvants, ces solvants additionnels pouvant, ou non, être des solvants de type diol ou triol.

Le dope d'adhésivité employé selon l'invention est un dope d'adhésivité qui, à l'état isolé, se présenterait sous forme solide (désigné ci-après de façon plus concise par « dope solide »). Le dope solide est par exemple un acide alkylphosphonique où le groupe alkyle comprend de 6 à 18 atomes de carbone, notamment l'acide octylphosphonique. Il peut typiquement s'agir du produit commercial solide Rhodoval® DP 500.

La description qui suit est faite, à titre illustratif uniquement, en référence à l'hexylène glycol. Il est entendu que l'invention peut être employés avec d'autres type de diols, en particulier avec l'éthylène glycol ou le diéthylène glycol (qui présentent, entre autres avantages par rapport à l'hexylène glycol, celui d'être moins onéreux) ou bien encore le glycérol (qui présente des avantages similaires).

Le terme «hexylène glycol » tel qu'employé dans la présent description doit être entendu dans son acception courante : il désigne le 2-methyl pentane-2,4-diol , à savoir le le glycol en C₆ de formule C₃-CHOH-CH₂-C(CH₃)₂OH.

En particulier avec les dopes solides du type précités, et tout particulièrement avec les acide alkylphosphoniques où le groupe alkyle comprend de 6 à 18 atomes de carbone, et notamment avec l'acide octylphosphonique, il faut employer une quantité relativement élevée de solvant hexylène glycol pour mettre le dope solide en solution, typiquement avec un rapport massique solvant/dope supérieur à 0,8 et de préférence supérieur ou égal à 0,9. On préfère employer le solvant hexylène glycol en quantité juste suffisante pour assurer la dissolution du dope solide, ce qui est obtenu en général avec un rapport massique solvant/dope qui peut rester inférieur à 1,2, voire à 1,1. Ainsi, par exemple, pour solubiliser l'acide octylphosphonique, il est nécessaire que le ratio massique solvant/dope soit supérieur ou égal à 50% et on emploie typiquement un mélange équimassique d'acide octylphosphonique et d'hexylèneglycol (rapport massique acide octylphosphonique/hexylène glycol égal à 1).

L'ajout de solvant conduit ainsi, dans le cas le plus général à des dopes d'adhésivité liquide qui contiennent au plus de l'ordre de 50 à 60 % de principe actif et au moins 40 à 50% de solvant. Toutefois, et de façon tout à fait façon surprenante, il a maintenant été mis en évidence par les inventeurs que, en dépit de cet effet de dilution important, la composition liquide diluée conduit en fait à des résultats aussi intéressants en terme de dopage qu'avec le dope solide sans solvant, et ce sans avoir à contrebalancer l'effet de dilution par un surdosage.

Concrètement et contre toute attente, comme cela est illustré dans les exemples illustratifs qui sont donnés ci-après, on obtient des résultats similaires en termes d'adhésivité (à savoir des résultats suffisants en pratique pour assurer une bonne adhésivité) en ajoutant à un liant de type bitume :
- 0,3% en masse (à savoir 3 kg de dope par tonne de liant solide de type acide octylphosphonique par exemple)
   ou
- 0,3% en masse d'un mélange équimassique du dope solide et d'hexylène glycol.

En d'autres termes, il s'avère que le solvant spécifique proposé permet de fournir de façon extrêmement simple une composition liquide alternative aux dopes solides, cette composition liquide pouvant être employée avantageusement avec le même dosage que le dope solide. La solubilisation du dope dans l'hexylène glycol se fait très aisément en mélangeant les deux produits puis en chauffant le mélange à une température d'au moins 60°C et typiquement de l'ordre de 80°C (plus on chauffe, plus la dissolution s'opère vite et il n'est généralement pas nécessaire de chauffer au-delà de 100°C, des températures élevées pouvant conduire à des dégradations de produits).

Plus avantageusement encore, il s'avère que les compositions de dope solide solubilisés dans l'hexylène glycol peuvent être employées dans la gamme de concentration de l'ordre de 0,3% en masse qui est le dosage typique retenu dans le domaine pour la teneur en dope d'adhésivité, quelle que soit sa nature. Plus généralement, on peut utiliser la composition liquide un rapport composition liquide/bitume comprise entre 0,1 et 0,5%.

Ainsi, la présente invention fournit une alternative tout à fait intéressante aux dopes solides, en en conservant tous leurs avantages, et en ne gommant que leur inconvénient à savoir leur caractère solide, qui, entre autres, nuit à leur dosage. En s'affranchissant du caractère solide, l'invention permet en outre d'améliorer le transport du dope et la sécurité lors de sa manutention (produit pompable opérations de transvasement facilitées, pas de problématiques liées à l'emploi de poudres...).

Plus généralement, l'emploi de l'hexylène glycol peut permettre de formuler tout type de dope d'adhésivité, notamment phosphoré, solide ou non. Ce solvant peut par exemple être employé pour réaliser des mélanges de dopes dont au moins un est solide.

Les compositions solubilisées dans l'hexylène glycol peuvent être employées dans toute application usuelle des dopes d'adhésivité, ces compositions liquides étant stable à la température de travail usuelle des bitumes notamment aux températures où les bitumes sont employés à chaud (de l'ordre de 160°C), les compositions étant généralement stables jusqu'à au moins 200°C et au-delà. A noter qu'il est préférable de travailler à une température inférieure à 250°C pour éviter une dégradation de la composition, mais que de telles températures ne sont quasiment jamais requises dans le domaine des bitumes.

Différents aspects et avantages de l'invention seront encore illustrés par les exemples illustratifs ci-après qui mettent en oeuvre à titre de dope d'adhésivité liquide de l'acide octylphosphonique en solution dans de l'hexylèneglycol (mélange équimassique 1:1 acide octylphosphonique / hexyleneglycol).

### Exemple 1

### Préparation du dope d'adhésivité liquide (dope D)

50g d'acide octylphosphonique (solide) ont été mélangés à 50g d'hexylèneglycol. On a ensuite porté ce mélange à 80°C sous agitation jusqu'à dissolution complète (opérée en 2h environ).

On a ainsi obtenu un dope d'adhésivité sous forme liquide (dope D).

### Exemple 2

### Performances du dope P en adhésivité

Dans cet exemple, on a observé la perte d'adhésivité induite par une mise en contact d'enrobés bitumineux (granulat 6/10 pré-enrobé) avec de l'eau distillée portée à ébullition, pour des enrobés de bitume obtenus en mettant en oeuvre le dope D avec différents types de granulats.

Pour ce faire, le dope a été injecté dans le bitume fondu avant enrobage des granulats, ce qui correspond au mode le plus usuel de mise en oeuvre des dopes d'adhésivité liquides selon la présente invention.

A titre comparatif, on a observé en parallèle la perte d'adhésivité sous l'effet d'eau distillée à ébullition avec des enrobés préparés avec de l'acide octylphosphonique non dissous dans l'hexylèneglycol.

Plus précisément, les tests ont été effectués dans les conditions ci-après :

### MATERIAUX EMPLOYÉS

### • Bitume :

On a utilisé un bitume 35/50 Azalt® Donges.

### • Granulats:

On a utilisé :
quatre matériaux de référence (étalons)selon la norme NF EN 13614, à savoir :
   - quartzite de Chailloue
   - diorite de la Meilleraie
   - calcaire de la Vallée Heureuse
   - silex de Cassier
trois autres matériaux:
   - gabbro des quatre étalons
   - gneiss de La Roderie
   - granite de la Gouraudière

### PRÉPARATION DES ENROBÉS

Le même protocole a été employé pour chacun des granulats employés :
Le granulat a tout d'abord été tamisé sur un tamis de 10 mm puis la partie tamisée (avec des particules de taille inférieure à 10 mm) a été passée sur un tamis de 6,3 mm pour éliminer les particules de taille inférieure à 6,3 mm, ce par quoi on a obtenu une fraction granulaire 6,3/10 conformément à la norme EN 12697-2. La fraction 6,3/10 obtenue sur le deuxième tamis a été lavée à l'eau puis séchée sous étuve ventilée thermostatée (110°C) jusqu'à masse constante (une nuit).

On a préparé un échantillon de bitume de 50g à partir de bitume chauffé à température de 100°C qu'on a ensuite laissé refroidir à température ambiante (25°C).

Pour procéder au dopage, on a porté l'échantillon de 50 g de bitume à 135°C puis on y a injecté le dope (dope D ou acide octylphosphonique selon le cas, comme indique dans le tableau ci-après). Dans la plupart des cas, on a ajouté 0,15g, soit 0,3% en masse, de dope. A titre de comparaison, deux cas sont illustrés pour une quantité de dope deux fois inférieure (0,15% en masse : voir la note ** du tableau ci-dessous).

L'enrobage a été réalisé en introduisant 200 g de granulat 6,3/10 dans un bol de malaxage à 165°C placés durant 3 heures dans une étuve ventilée, puis en ajoutant à ces granulats 4,6 g de bitume (liant) préalablement préchauffé à 165°C sous étuve ventilée, et en homogénéisant le bitume avant son ajout sur les granulats. Le mélange a ensuite été malaxé vigoureusement à la spatule jusqu'à un enrobage uniforme. La température de malaxage de 165°C est conforme à la norme EN 12697-35.

Deux types d'enrobés ont été réalisés :
- **enrobés sans temps de conservation (dits « T=0 ») :**
   le bitume dopé a été chauffé en étuve ventilée à 165°C pendant 45 minutes
- **enrobés avec temps de conservation (dits « T=7 »)** :
   Avant d'effectuer l'enrobé, le bitume dopé a été a été préalablement chauffé en étuve ventilée à 160°C pendant 7 jours. Le jour de l'essai, le bitume dopé a été chauffé en étuve ventilée à 165°C pendant 30 minutes.

Pour chaque essai, quel que soit le cas considéré, le liant a donc subi trois étapes de chauffe (préparation de l'échantillon, dopage, enrobage).

Après l'enrobage, les enrobés ont été étalés sur du papier sulfurisé pour séparer les granulats et qu'ils n'adhèrent pas entre eux.

### ESSAIS DE DESENROBAGE

On a utilisé 200 g de granulats enrobés obtenus selon la méthode décrite ci-dessus, qu'on a introduit dans de l'eau distillée portée à ébullition dans une barquette en aluminium équipée d'une grille support.

On a laissé les granulats dans l'eau bouillante pendant 10 minutes puis on lesva retirés et versés sur un tamis de maille de 4 mm puis placé sur papier sulfurisés pour les faire refroidir.

Après refroidissement, on a établi le pourcentage de surface enrobée, selon la norme NF EN 13614. Par rapport à la norme, on a établi une échelle plus fine (soit 10% - 20%- 25% - 30% - 40% - 50% - 60% - 70 % - 75% - 80% - 90% et 100%). L'appréciation, visuelle, a été effectuée par trois observateurs sans concertation.

Les résultats obtenus sont reportés dabs le Tableau 1 ci-après, qui reporte le taux d'enrobage restant(pourcentage de surface restant enrobée).

Ce tableau montre que, pour tous les granulats testés avec 0,3% de dope D dans le liant, on obtient une résistance au désenrobage tout à fait acceptable (à savoir une surface enrobée qui reste d'au moins 70%).

Ces résultats intéressants sont du même ordre que celle obtenue avec le témoin (acide octylphosphonique (AO) à 0,3%), ce qui montre que la composition liquide (utilisée à 0,3%, soit 0,15% de AO + 0,15% de solvant) est aussi efficace que la composition solide (0,3% de AO).

**Tableau 1 :**

| **taux d'enrobage restant (%)** | | | | |
|---|---|---|---|---|
| **Granulat** | **Témoin AO 0,3%** | | **dope D 0,30%** | |
| | **T=0** | **T=7** | **T=0** | **T=7** |
| **Granite de la Gouraudière** | 75% ^{(*)} | 80% ^{(*)} | 75% | 80% |
| **Gneis de La Roderie** | 90% | 90% | 90% | 90% |
| **Gabbro des étalons** | 90% | 100% | 100% | 90% |
| **Calcaire de la Vallée Heureuse** | 90% | 90% | 90% | 80% |
| **Quartzite de la Chailloue** | 80% | 90% | 80% | 70% |
| **Diorite de la Meilleraie** | 70% | 90% | 90% | 80% |
| **Silex de Cassier** | 80% | 75% | 80% | 70% |

| | | | | |
|---|---|---|---|---|
| (*) : à noter qu'on obtient des résultats similaires avec seulement 0,15% d'acide octylphosphonique, sans hexyleneglycol. | | | | |

Pour le granite de La Gouraudière, par exemple :
Pour T=0 :
   Taux d'enrobage restant = 75%
Pour T=7 :
   Taux d'enrobage restant = 75%

## Revendications

1. Utilisation d'une composition liquide, comprenant au moins un dope d'adhésivité pour bitume en solution dans un solvant comprenant un diol ou un triol, comme dope d'adhésivité pour bitume,
où :
le dope d'adhésivité est choisi parmi :
• les esters de phosph(on)ate, tels que :
∘ les alkyl esters de l'acide phosphonique, par exemple les esters d'alkyle en C6-C18, de préférence les esters de monoalkyle ;
∘ les alkyl esters d'acides alkylphosphoniques, où la chaîne alkyle peut optionnellement être éthoxylée et/ou propoxylée, tels que les esters de (C1-C4) alkyle d'acides (C6-C18)alkyl phosphonique , préférence les esters de monoalkyle;
∘ les alkylphosphates, de préférence les monoalkylphosphate ;
• les acides phosphoniques,
en particulier les acides alkylphosphonique, notamment les acides alkylphosphonique où le groupe alkyle comprend de 6 à 18 atomes de carbone, notamment de 8 à 12 ;
et
• les mélanges de deux ou plusieurs de ces composés,
et où le dope d'adhésivité est un dope d'adhésivité qui se présenterait sous forme solide à l'état isolé.

2. Utilisation selon la revendication 1, où on utilise un diol.

3. Utilisation selon la revendication 2, où le diol est l'hexylène glycol.

4. Utilisation selon la revendication 2, où le diol est l'éthylène glycol et/ou le diéthylène glycol.

5. Utilisation selon la revendication 1 où on utilise un triol, de préférence le glycérol.

6. Utilisation selon l'une des revendications 1 à 5, où le dope d'adhésivité est un acide alkylphosphonique où le groupe alkyle comprend de 6 à 18 atomes de carbone.

7. Utilisation selon la revendication 6, où le dope d'adhésivité est l'acide octylphosphonique.

8. Utilisation selon l'une des revendications 1 à 7, où la composition liquide est employée dans un bitume avec un rapport composition liquide/bitume comprise entre 0,1 et 0,5%.

## Patentansprüche

1. Verwendung einer flüssigen Zusammensetzung, die mindestens einen Haftfestigkeitsverbesserer für Bitumen in Lösung in einem Lösungsmittel, das ein Diol oder ein Triol umfasst, umfasst, als Haftfestigkeitsverbesserer für Bitumen,
wobei:
der Haftfestigkeitsverbesserer aus
• Phosph(on)atestern, wie:
∘ Alkylestern von Phosphonsäure, beispielsweise C6-C18-Alkylestern, vorzugsweise Monoalkylestern;
∘ Alkylestern von Alkylphosphonsäuren, wobei die Alkylkette gegebenenfalls ethoxyliert und/oder propoxyliert sein kann, wie (C1-C4)Alkylestern von (C6-C18)Alkylphosphonsäuren, vorzugsweise Monoalkylestern;
∘ Alkylphosphaten, vorzugsweise Monoalkylphosphaten;
• Phosphonsäuren,
insbesondere Alkylphosphonsäuren, speziell Alkylphosphonsäuren mit 6 bis 18 und speziell 8 bis 12 Kohlenstoffatomen in der Alkylgruppe;
• Mischungen von zwei oder mehr dieser Verbindungen
ausgewählt ist
und wobei es sich bei dem Haftfestigkeitsverbesserer um einen Haftfestigkeitsverbesserer handelt, der in isoliertem Zustand in fester Form vorliegen würde.

2. Verwendung nach Anspruch 1, wobei ein Diol verwendet wird.

3. Verwendung nach Anspruch 2, wobei es sich bei dem Diol um Hexylenglykol handelt.

4. Verwendung nach Anspruch 2, wobei es sich bei dem Diol um Ethylenglykol und/oder Diethylenglykol handelt.

5. Verwendung nach Anspruch 1, wobei ein Triol, vorzugsweise Glycerin, verwendet wird.

6. Verwendung nach einem der Ansprüche 1 bis 5, wobei es sich bei dem Haftfestigkeitsverbesserer um eine Alkylphosphonsäure mit 6 bis 18 Kohlenstoffatomen in der Alkylgruppe handelt.

7. Verwendung nach Anspruch 6, wobei es sich bei dem Haftfestigkeitsverbesserer um Octylphosphonsäure handelt.

8. Verwendung nach einem der Ansprüche 1 bis 7, wobei die flüssige Zusammensetzung in einem Bitumen mit einem Verhältnis von flüssiger Zusammensetzung zu Bitumen zwischen 0,1 und 0,5 % eingesetzt wird.

## Claims

1. Use of a liquid composition, comprising at least one anti-stripping agent for bitumen in solution in a solvent comprising a diol or a triol, as anti-stripping agent for bitumen,
where:
the anti-stripping agent is selected from:
• phosph(on)ate esters, such as:
∘ alkyl esters of phosphonic acid, for example C6-C18 alkyl esters, preferably monoalkyl esters;
∘ alkyl esters of alkylphosphonic acids, where the alkyl chain may optionally be ethoxylated and/or propoxylated, such as (C1-C4)alkyl esters of (C6-C18)alkylphosphonic acids, preferably monoalkyl esters;
∘ alkyl phosphates, preferably monoalkyl phosphates;
• phosphonic acids,
in particular alkylphosphonic acids, especially alkylphosphonic acids where the alkyl group comprises from 6 to 18, especially from 8 to 12, carbon atoms;
and
• mixtures of two or more of these compounds,
and where the anti-stripping agent is an anti-stripping agent that would be in solid form in the isolated state.

2. Use according to Claim 1, where a diol is used.

3. Use according to Claim 2, where the diol is hexylene glycol.

4. Use according to Claim 2, where the diol is ethylene glycol and/or diethylene glycol.

5. Use according to Claim 1, where a triol is used, preferably glycerol.

6. Use according to one of Claims 1 to 5, where the anti-stripping agent is an alkylphosphonic acid where the alkyl group comprises from 6 to 18 carbon atoms.

7. Use according to Claim 6, where the anti-stripping agent is octylphosphonic acid.

8. Use according to one of Claims 1 to 7, where the liquid composition is used in a bitumen with a liquid composition/bitumen ratio of between 0.1% and 0.5%.
